# EUROPÄISCHE PATENTSCHRIFT

(11) **EP 2 745 990 B1**
(45) Veröffentlichungstag und Bekanntmachung des Hinweises auf die Patenterteilung: **24.04.2019**
(21) Anmeldenummer: 13182910.3
(22) Anmeldetag: 04.09.2013
(51) Int. Cl.: B25F 3/00

(54) **Werkzeugvorsatz für eine Handwerkzeugmaschine**
Tool attachment for a hand tool machine
Ensemble d'outils pour une machine-outil manuelle

(30) Priorität: 15.11.2012 DE 102012220910; 15.07.2013 DE 102013213806
(43) Veröffentlichungstag der Anmeldung: 25.06.2014
(73) Patentinhaber: ROBERT BOSCH GMBH, 70442 Stuttgart (DE)
(72) Erfinder: Tussing, Torsten, 73257 Koengen (DE)

(56) Entgegenhaltungen:
- DE-A1- 10 109 956
- US-A- 5 832 611
- US-A1- 2001 017 447
- US-A1- 2008 136 125
- US-A1- 2011 209 888

## Beschreibung

### Stand der Technik

Die vorliegende Erfindung betrifft einen Werkzeugvorsatz mit einem Vorsatzgehäuse, an dem eine Befestigungsschnittstelle zur Befestigung an einer Handwerkzeugmaschine angeordnet ist, wobei die Befestigungsschnittstelle eine Winkelpositionseinstelleinheit zur Einstellung einer vorgegebenen Winkelposition des Werkzeugvorsatzes an der Handwerkzeugmaschine aufweist und mit einer Verriegelungseinheit versehen ist, die in einem Verriegelungszustand den Werkzeugvorsatz zum Betrieb an der Handwerkzeugmaschine in der vorgegebenen Winkelposition verriegelt und im Entriegelungszustand ein Abziehen des Werkzeugvorsatzes von der Handwerkzeugmaschine ermöglicht.

Aus der FR 2 704 793 A1 ist ein derartiger Werkzeugvorsatz bekannt, der zur Befestigung an einer Handwerkzeugmaschine eine Befestigungsschnittstelle aufweist, die mit einer Winkelpositionseinstelleinheit und einer Verriegelungseinheit versehen ist. Die Winkelpositionseinstelleinheit dient zur Einstellung einer vorgegebenen Winkelposition des Werkzeugvorsatzes an der Handwerkzeugmaschine. Die Verriegelungseinheit dient dazu, in einem zugeordneten Entriegelungszustand ein Montieren oder Abziehen des Werkzeugvorsatzes an bzw. von der Handwerkzeugmaschine zu ermöglichen und in einem zugeordneten Verriegelungszustand den Werkzeugvorsatz zum Betrieb an der Handwerkzeugmaschine in der vorgegebenen Winkelposition zu verriegeln. Darüber hinaus kann die Verriegelungseinheit in einen Zwischenzustand überführt werden, in dem weder ein Abziehen des Werkzeugvorsatzes von der Handwerkzeugmaschine noch ein Betrieb der Handwerkzeugmaschine möglich sind, aber eine Betätigung der Winkelpositionseinstelleinheit zur Änderung der vorgegebenen Winkelposition.

Aus der US 5,832,611 ist ein Werkzeugvorsatz nach dem Oberbegriff des Anspruchs 1 bekannt.

Die DE 101 09 956 A1 offenbart eine Handwerkzeugmaschine mit einem austauschbaren Vorsatzgerät mit einem Gerätegehäuse, wobei das Vorsatzgerät mit seinem Gerätegehäuse am Maschinengehäuse befestigbar ist.

Nachteilig am Stand der Technik ist, dass die Handhabung eines derartigen Werkzeugvorsatzes umständlich und kompliziert ist und somit zu Komforteinbußen für einen Benutzer des Werkzeugvorsatzes führen kann.

### Offenbarung der Erfindung

Eine Aufgabe der Erfindung ist es daher, einen neuen Werkzeugvorsatz bereitzustellen, der in einer vorgegebenen Winkelposition an einer Handwerkzeugmaschine befestigbar ist und bei dem eine Änderung der vorgegebenen Winkelposition auf unkomplizierte, schnelle und für einen Benutzer komfortable Art und Weise erfolgen kann.

Dieses Problem wird gelöst durch einen Werkzeugvorsatz mit einem Vorsatzgehäuse, an dem eine Befestigungsschnittstelle zur Befestigung an einer Handwerkzeugmaschine angeordnet ist. Die Befestigungsschnittstelle weist eine Winkelpositionseinstelleinheit zur Einstellung einer vorgegebenen Winkelposition des Werkzeugvorsatzes an der Handwerkzeugmaschine auf und ist mit einer Verriegelungseinheit versehen, die in einem Verriegelungszustand den Werkzeugvorsatz zum Betrieb an der Handwerkzeugmaschine in der vorgegebenen Winkelposition verriegelt und im Entriegelungszustand ein Abziehen des Werkzeugvorsatzes von der Handwerkzeugmaschine ermöglicht. Die Winkelpositionseinstetleinheit ist im Verriegelungszustand der Verriegelungseinheit betätigbar, um eine Änderung der vorgegebenen Winkelposition zu ermöglichen.

Die Erfindung ermöglicht somit die Bereitstellung eines Werkzeugvorsatzes, bei dem durch eine Betätigung der Winkelpositionseinstelleinheit im Verriegelungszustand der Verriegelungseinheit eine Änderung einer jeweiligen Winkelposition erreicht werden kann. Somit kann auf eine Betätigung der Verriegelungseinheit vor und nach Betätigung der Winkelpositionseinstetleinheit verzichtet werden, sodass die Änderung der jeweiligen Winkelposition auf einfache Art und Weise beschleunigt werden kann und somit für einen Benutzer des Werkzeugvorsatzes komfortabler gestaltet wird.

Erfindungsgemäß ist die Winkelpositionseinstelleinheit durch eine kombinierte Längs- und Drehbewegung des Vorsatzgehäuses zur Änderung der vorgegebenen Winkelposition betätigbar.

Die Erfindung ermöglicht somit die Bereitstellung eines Werkzeugvorsatzes, bei dem das komplette Vorsatzgehäuse eine großflächige und somit sicher von einem Benutzer greif- und haltbare Betätigungsfläche zur Betätigung bei einer Winkelpositionsänderung ausbildet.

Bevorzugt weist die Winkelpositionseinstelleinheit ein Winkeleinstellelement auf, das starr mit dem Vorsatzgehäuse verbunden ist.

Somit kann eine einfache und stabile Winkelpositionseinstelleinheit bereitgestellt werden.

Das Vorsatzgehäuse und das Winkeleinstellelement sind bevorzugt einstückig ausgebildet.

Somit können das Vorsatzgehäuse und das Winkeleinstellelement als ein robustes Einzelbauteil ausgebildet werden.

Das Winkeleinstellelement ist bevorzugt zumindest abschnittsweise rohrförmig ausgebildet und weist eine stirnseitige Winkeleinstellverzahnung auf.

Somit kann ein unkompliziertes und kostengünstiges Winkeleinstellelement bereitgestellt werden.

Bevorzugt ist das Winkeleinstellelement in der Verriegelungseinheit längs- und drehbeweglich gelagert.

Somit kann eine sichere und zuverlässige Funktionsweise der Winkelpositionseinstelleinheit auf einfache Art und Weise gewährleistet werden.

Gemäß einer Ausführungsform weist die Verriegelungseinheit einen Verriegelungskörper auf, insbesondere einen zumindest abschnittsweise rohrförmig ausgebildeten Verriegelungskörper.

Die Erfindung ermöglicht somit die Bereitstellung eines Werkzeugvorsatzes mit einem robusten und kostengünstigen Verriegelungskörper.

Der Verriegelungskörper weist bevorzugt Verriegelungselemente auf, die nach Art von Bajonetten zur Ausbildung einer Bajonett-Verbindung ausgebildet sind.

Somit kann eine stabile und zuverlässige Verriegelung des Werkzeugvorsatzes an einer zugeordneten Handwerkzeugmaschine ermöglicht werden.

Bevorzugt weist die Verriegelungseinheit einen am Verrieglungskörper angeordneten Betätigungsring auf, der zur Verriegelung des Verriegelungskörpers an der Handwerkzeugmaschine betätigbar ist.

Somit kann eine unkomplizierte und komfortable Betätigung der Verriegelungseinheit ermöglicht werden.

Der Verriegelungskörper und der Betätigungsring sind bevorzugt einstückig ausgebildet.

Somit können der Verriegelungskörper und der Betätigungskörper als ein kostengünstiges und robustes Bauteil ausgebildet werden.

Gemäß einer Ausführungsform ist am Verrieglungskörper ein Federelement angeordnet, dass dazu ausgebildet ist, das Vorsatzgehäuse im Verriegelungszustand mit einer vorgegebenen Federkraft in Richtung der Handwerkzeugmaschine zu beaufschlagen.

Die Erfindung ermöglicht somit die Bereitstellung eines Werkzeugvorsatzes, bei dem das Vorsatzgehäuse auf einfache Art und Weise in Richtung der Handwerkzeugmaschine beaufschlagt werden kann.

Bevorzugt ist das Vorsatzgehäuse im Verriegelungszustand gegen die vorgegebene Federkraft in eine von der Handwerkzeugmaschine wegweisende Richtung verschiebbar.

Somit kann eine unkomplizierte und komfortable Handhabung des Werkzeugvorsatzes ermöglicht werden.

Gemäß einer Ausführungsform ist eine Antriebswelle vorgesehen, der ein Betätigungsglied zugeordnet ist, das dazu ausgebildet ist, bei einer Befestigung des Werkzeugvorsatzes an der Handwerkzeugmaschine eine einer Werkzeugaufnahme der Handwerkzeugmaschine zugeordnete Verriegelungshülse gegen eine von einem zugeordneten Federelement aufgebrachte Federkraft in Richtung der Handwerkzeugmaschine zu verschieben.

Die Erfindung ermöglicht somit die Bereitstellung eines Werkzeugvorsatzes, bei dem durch eine Betätigung der Verriegelungshülse einer der Handwerkzeugmaschine zugeordneten Werkzeugaufnahme durch ein dem Werkzeugvorsatz zugeordnetes Betätigungsglied zur Montage des Werkzeugvorsatzes die Werkzeugaufnahme entriegelbar ist, und somit eine Reduzierung eines zwischen einer Antriebswelle des Werkzeugvorsatzes und einer Werkzeugaufnahme der Handwerkzeugmaschine vorliegenden, tangentialen und radialen Spiels ermöglicht werden kann.

Das Eingangs genannte Problem wird auch gelöst durch eine Handwerkzeugmaschine mit einem Getriebegehäuse, an dem eine Befestigungsschnittstelle zur verdrehgesicherten Befestigung eines Werkzeugvorsatzes vorgesehen ist. Die Befestigungsschnittstelle ist dazu ausgebildet, eine in einer vorgegebenen Winkelposition ausgerichtete Befestigung des Werkzeugvorsatzes an dem Getriebegehäuse zu ermöglichen.

Das Eingangs genannte Problem wird darüber hinaus auch gelöst durch ein Werkzeugsystem mit einer Handwerkzeugmaschine und einem Werkzeugvorsatz, der ein Vorsatzgehäuse aufweist, an dem eine Befestigungsschnittstelle zur Befestigung an der Handwerkzeugmaschine angeordnet ist. Die Befestigungsschnittstelle weist eine Winkelpositionseinstelleinheit zur Einstellung einer vorgegebenen Winkelposition des Werkzeugvorsatzes an der Handwerkzeugmaschine auf und ist mit einer Verriegelungseinheit versehen, die in einem Verriegelungszustand den Werkzeugvorsatz zum Betrieb an der Handwerkzeugmaschine in der vorgegebenen Winkelposition verriegelt und im Entriegelungszustand ein Abziehen des Werkzeugvorsatzes von der Handwerkzeugmaschine ermöglicht. Die Winkelpositionseinstelleinheit ist im Verriegelungszustand der Verriegelungseinheit betätigbar, um eine Änderung der vorgegebenen Winkelposition zu ermöglichen.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht einer Handwerkzeugmaschine mit einer Werkzeugaufnahme und einer Befestigungsschnittstelle gemäß einer Ausführungsform,
Fig. 2 eine Schnittansicht eines Werkzeugvorsatzes mit einer Befestigungsschnittstelle zur Befestigung an einer Handwerkzeugmaschine gemäß einer Ausführungsform,
Fig. 3 eine perspektivische Rückansicht des Werkzeugvorsatzes von Fig. 2,
Fig. 4 eine Schnittansicht eines Werkzeugsystems gemäß einer Ausführungsform mit dem an der Handwerkzeugmaschine von Fig. 1 befestigten Werkzeugvorsatz von Fig. 2 und 3, und
Fig. 5 eine Schnittansicht eines Werkzeugsystems gemäß einer Ausführungsform mit dem an der Handwerkzeugmaschine von Fig. 1 befestigten Werkzeugvorsatz von Fig. 2 und 3 bei einer Winkelpositionsänderung des Werkzeugvorsatzes.

### Beschreibung der Ausführungsbeispiele

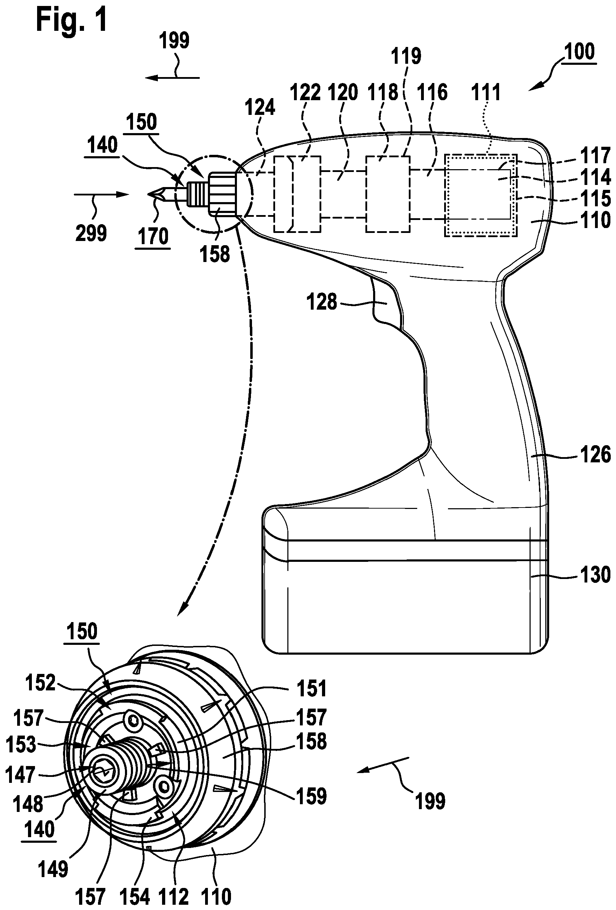

Fig. 1 zeigt eine mit einer Werkzeugaufnahme 140 versehene Handwerkzeugmaschine 100, die ein Gehäuse 110 mit einem Handgriff 126 aufweist. Gemäß einer Ausführungsform ist die Handwerkzeugmaschine 100 zur netzunabhängigen Stromversorgung mechanisch und elektrisch mit einem Akkupack 130 verbindbar.

Die Handwerkzeugmaschine 100 ist beispielhaft als Akku-Drehschlagschrauber ausgebildet. Es wird jedoch darauf hingewiesen, dass die vorliegende Erfindung nicht auf Akku-Drehschlagschrauber beschränkt ist, sondern vielmehr bei unterschiedlichen Handwerkzeugmaschinen Anwendung finden kann, die eine der Werkzeugaufnahme 140 entsprechende Werkzeugaufnahme aufweisen, unabhängig davon, ob die Handwerkzeugmaschine elektrisch, d.h. netzunabhängig mit dem Akkupack 130 oder netzabhängig, und/oder nicht-elektrisch betreibbar ist.

In dem Gehäuse 110 sind ein von dem Akkupack 130 mit Strom versorgter, elektrischer Antriebsmotor 114, ein Getriebe 118 und ein optionales Schlagwerk 122 angeordnet. Der Antriebsmotor 114 ist z. B. über einen Handschalter 128 betätigbar, d. h. ein- und ausschaltbar, und vorzugsweise derart elektronisch Steuer- bzw. regelbar, dass sowohl ein Reversierbetrieb, als auch Vorgaben hinsichtlich einer gewünschten Drehgeschwindigkeit realisierbar sind.

Gemäß einer Ausführungsform ist der Antriebsmotor 114 ein elektronisch kommutierter Antriebsmotor, vorzugsweise ein Gleichstrommotor, der illustrativ Stator- und Rotorkomponenten 111 bzw. 117 aufweist. Hierbei bilden die Statorkomponenten 111 beispielhaft einen Außenstator aus und die Rotorkomponenten 117 beispielhaft einen Innenrotor. Es wird jedoch darauf hingewiesen, dass die Beschreibung eines nach Art eines elektronisch kommutierten Antriebsmotors mit Außenstator und Innenrotor ausgebildeten Antriebsmotors lediglich beispielhaften Charakter hat und nicht als Einschränkung der Erfindung zu verstehen ist, die auch bei einem Antriebsmotor mit Innenstator und Außenrotor oder z. B. bei einem bürstenbehaften Kommutatormotor Anwendung finden kann.

Der Antriebsmotor 114 ist über eine zugeordnete Motorwelle 116 mit dem Getriebe 118 verbunden, das eine Drehung der Motorwelle 116 in eine Drehung eines zwischen Getriebe 118 und Schlagwerk 122 vorgesehenen Antriebsglieds 120, z. B. einer Antriebswelle, umwandelt. Diese Umwandlung erfolgt bevorzugt derart, dass das Antriebsglied 120 sich relativ zur Motorwelle 116 mit vergrößertem Drehmoment, aber verringerter Drehgeschwindigkeit dreht. Der Antriebsmotor 114 ist illustrativ in einem Motorgehäuse 115 angeordnet und das Getriebe 118 in einem Getriebegehäuse 119, wobei das Getriebegehäuse 119 und das Motorgehäuse 115 beispielhaft in dem Gehäuse 110 angeordnet sind.

Das mit dem Antriebsglied 120 verbundene, optionale Schlagwerk 122 ist beispielhaft ein Dreh- bzw. Rotationsschlagwerk, das schlagartige Drehimpulse mit hoher Intensität erzeugt und auf eine Abtriebswelle 124, z. B. eine Abtriebsspindel, überträgt. Ein beispielhaftes Schlagwerk, mit dem das Schlagwerk 122 realisiert werden kann, ist in der DE 20 2006 014 850 U1 beschrieben, auf die hier ausdrücklich Bezug genommen wird, sodass hier zwecks Knappheit der Beschreibung auf eine eingehende Beschreibung des Schlagwerks 122 verzichtet werden kann.

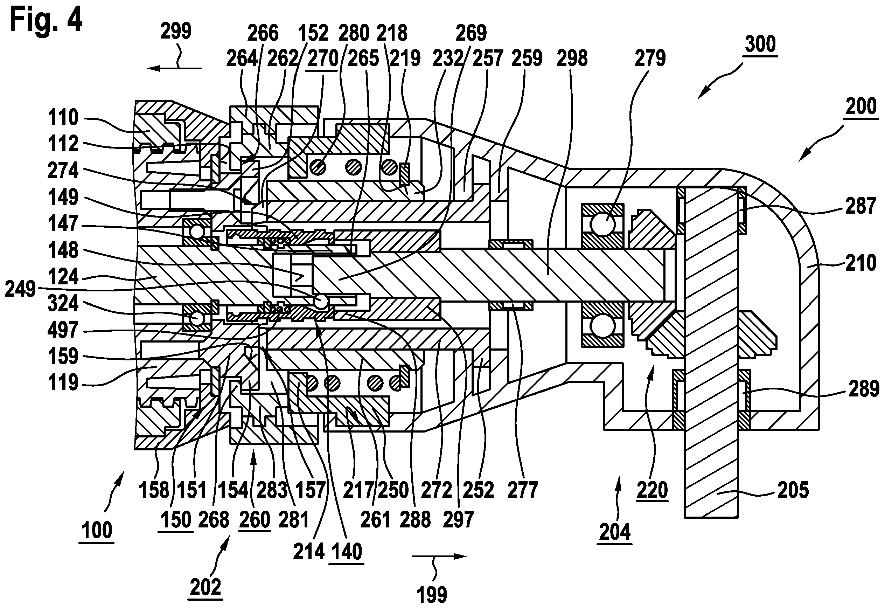

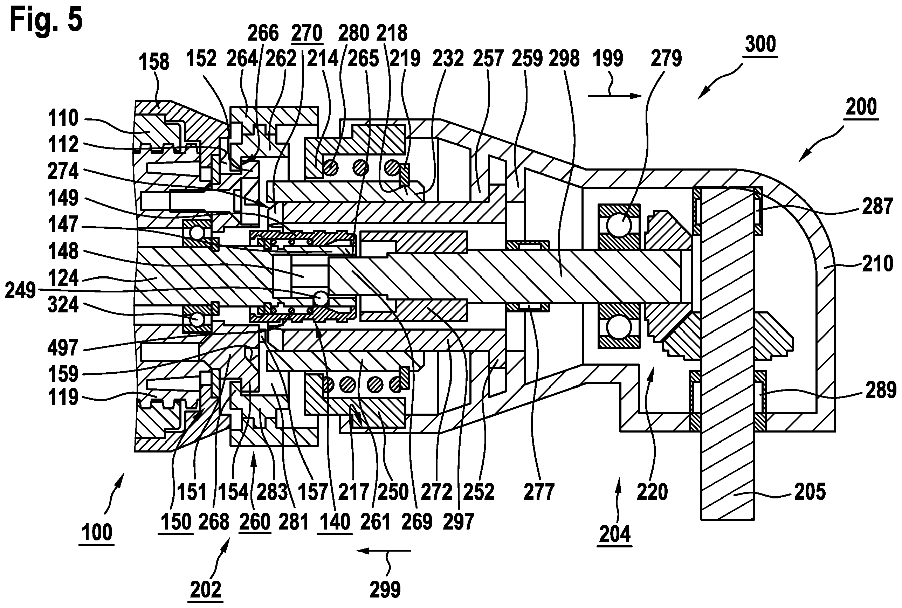

An der Abtriebswelle 124 ist die Werkzeugaufnahme 140 ausgebildet, die illustrativ einen Aufnahmekörper 147 mit Innenmehrkant-Aufnahme 148 aufweist, die zur Aufnahme von Einsatzwerkzeugen mit Außenmehrkant-Kupplungen vorgesehen ist. Am Außenumfang des z. B. drehfest und/oder einstückig mit der Abtriebswelle 124 verbundenen Aufnahmekörpers 147 ist beispielhaft eine von einem Federelement (497 in Fig. 4 und 5) in eine von der Handwerkzeugmaschine 100 wegweisende axiale Richtung 199 federbeaufschlagte Verriegelungshülse 149 zur Verriegelung geeigneter Einsatzwerkzeuge in der Innenmehrkant-Aufnahme 148 angeordnet.

Die Werkzeugaufnahme 140 ist beispielhaft nach Art eines Bithalters ausgebildet, d. h. zur Aufnahme eines nach Art eines Schrauberbits ausgebildeten Einsatzwerkzeugs 170, das in Richtung der Handwerkzeugmaschine 100, wie mit einem Pfeil 299 angedeutet, in die Innenmehrkant-Aufnahme 148 eingeschoben wird. Ein derartiger Schrauberbit, der z. B. vom sogenannten HEX-Typ ist, ist hinreichend aus dem Stand der Technik bekannt, sodass hier zwecks Knappheit der Beschreibung auf eine eingehende Beschreibung verzichtet wird. Es wird jedoch darauf hingewiesen, dass die vorliegende Erfindung nicht auf eine Verwendung von HEX-Schrauberbits beschränkt ist, sondern auch weitere Einsatzwerkzeuge in Abhängigkeit von einer jeweils gewählten Ausgestaltung der Werkzeugaufnahme 140, z. B. HEX-Bohrer oder sogenannte SDS-Quick-Einsatzwerkzeuge, Anwendung finden können. Darüber hinaus wird darauf hingewiesen, dass auch der Aufbau und die Funktionsweise eines geeigneten Bithalters dem Fachmann hinreichend bekannt sind, sodass hier zwecks Knappheit der Beschreibung auf eine eingehende Beschreibung des Bithalters 140 verzichtet werden kann.

Gemäß einer Ausführungsform ist der Handwerkzeugmaschine 100 eine Befestigungsschnittstelle 150 zugeordnet, die illustrativ im Bereich des Bithalters 140 am Gehäuse 110 axial und radial unbeweglich befestigt ist und nachfolgend zwecks Klarheit der Beschreibung als die "Maschinenschnittstelle 150" bezeichnet wird. Bevorzugt ist die Maschinenschnittstelle 150 axial und radial unbeweglich am Getriebegehäuse 119 befestigt, wie in Fig. 4 und 5 gezeigt. Es wird jedoch darauf hingewiesen, dass die Maschinenschnittstelle 150 lediglich beispielhaft als ein separates Bauteil ausgebildet ist und alternativ hierzu auch einstückig mit dem Gehäuse 110 und/oder dem Getriebegehäuse 119 ausgebildet sein kann.

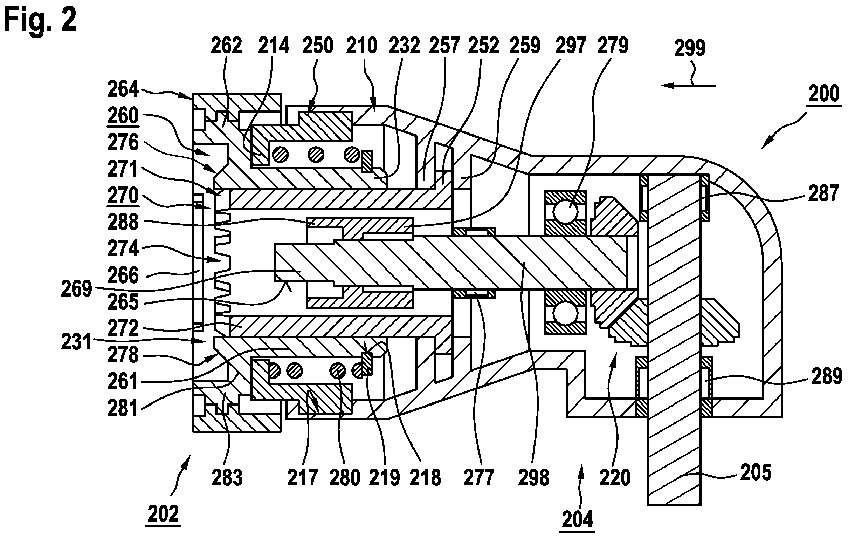

Die Maschinenschnittstelle 150 dient zur Befestigung eines zugeordneten Werkzeugvorsatzes (200 in Fig. 2), insbesondere einer in einer vorgegebenen Winkelposition ausgerichteten Befestigung, und weist illustrativ ein an einer Stirnseite 112 des Gehäuses 110 am Gehäuse 110 und/oder dem Getriebegehäuse 119 verdrehgesichert befestigtes Befestigungselement 151 auf. Dieses ist beispielhaft zumindest abschnittsweise hülsen- bzw. ringförmig ausgebildet und im Bereich einer an der Stirnseite 112 am Gehäuse 110 ringförmig angeordneten Abschluss- bzw. Schutzhülse 158 mit geeigneten Befestigungsgliedern, z. B. Schrauben oder Nieten, befestigt, kann alternativ hierzu aber auch einstückig mit dem Gehäuse 110 und/oder dem Getriebegehäuse 119 ausgebildet sein. Das Befestigungselement 151 ummantelt den Bithalter 140 bevorzugt zumindest abschnittsweise mit einer vorgegebenen radialen Beabstandung, um eine axiale Verschiebung der Verriegelungshülse 149 des Bithalters 140 im Inneren des Befestigungselements 151 zu ermöglichen.

Das Befestigungselement 151 ist bevorzugt dazu ausgebildet, eine verdrehgesicherte axiale Zentrierung eines zugeordneten Werkzeugvorsatzes (200 in Fig. 2) an dem Gehäuse 110 zu ermöglichen, wie untenstehend bei Fig. 4 und 5 beschrieben. Illustrativ weist das Befestigungselement 151 an seinem Außenumfang mindestens zwei Halteglieder 152, 154 auf, die nach Art von Bajonetten zur Ausbildung einer Bajonett-Verbindung ausgebildet sind. Es wird jedoch hingewiesen, dass die Beschreibung einer derartigen Bajonett-Verbindung lediglich beispielhaften Charakter hat und nicht als Einschränkung der Erfindung dient. Vielmehr können auch alternative Befestigungsmöglichkeiten, wie z. B. eine sogenannte Drahtbügelverriegelung oder eine Kugelverriegelung usw., Anwendung finden.

Darüber hinaus ist am Innenumfang des Befestigungselements 151 eine nach Art einer ringförmigen Kegelfläche 159 ausgebildete Zentrierhilfe 153 vorgesehen. Des Weiteren weist das Befestigungselement 151 mindestens ein und beispielhaft drei Winkeleinstellglieder 157 auf. Es wird jedoch darauf hingewiesen, dass die beschriebene Ausgestaltung der Zentrierhilfe 153 und die angegebene Anzahl der Winkeleinstellglieder 157 lediglich beispielhaften Charakter hat und nicht zur Einschränkung der Erfindung dient. Vielmehr sind andere Ausgestaltungen und Anzahlen möglich, z. B. kann die Zentrierhilfe 153 anstelle einer ringförmigen Kegelfläche 159 mehrere kegelförmige Bogenabschnitte aufweisen und anstelle der drei Winkeleinstellglieder 157 können sechs oder mehr Winkeleinstellglieder Anwendung finden, usw.

Fig. 2 zeigt einen beispielhaften Werkzeugvorsatz 200, der gemäß einer Ausführungsform zur Befestigung an der Maschinenschnittstelle 150 der Handwerkzeugmaschine 100 von Fig. 1 ausgebildet ist. Der Werkzeugvorsatz 200 ist gemäß einer Ausführungsform nach Art eines Winkelvorsatzes ausgebildet und weist beispielhaft eine nachfolgend zwecks Klarheit der Beschreibung als "Vorsatzschnittstelle" bezeichnete Befestigungsschnittstelle 202 sowie eine nachfolgend auch als "Winkelantriebsabschnitt" bezeichnete Antriebseinheit 204 auf. Es wird jedoch darauf hingewiesen, dass der Werkzeugvorsatz 200 nur beispielhaft als Winkelvorsatz ausgebildet ist und nicht zur Einschränkung der Erfindung. Vielmehr kann der Werkzeugvorsatz 200 eine beliebige Ausgestaltung haben, z. B. nach Art eines Exzentervorsatzes usw. Zur Vereinfachung der Beschreibung wird der Werkzeugvorsatz 200 deshalb nachfolgend auch als der "Winkelvorsatz 200" bezeichnet.

Der Winkelantriebsabschnitt 204 weist beispielhaft ein Vorsatzgehäuse 210 auf, in dem eine drehend antreibbare Antriebswelle 298 in zwei Lagerelementen 277, 279 drehbeweglich gelagert ist. Die Antriebswelle 298 dient zum Antrieb einer in einem vorgegebenen Winkel, illustrativ 90°, hierzu angeordneten Abtriebswelle 205, die ebenfalls drehbeweglich im Vorsatzgehäuse 210 gelagert ist, beispielhaft in zwei Lagerelementen 287, 289, und z. B. zur Aufnahme des Schrauberbits 170 von Fig. 1 ausgebildet sein kann. Hierbei treibt die Antriebswelle 298 die Abtriebswelle 205 z. B. über eine geeignete Umsetzung 220 an. Es wird jedoch darauf hingewiesen, dass eine geeignete Realisierung des Winkelantriebsabschnitts 204 hinreichend aus dem Stand der Technik bekannt ist, sodass hier auf eine eingehende Beschreibung des Winkelantriebabschnitts 204 zwecks Knappheit der Beschreibung verzichtet werden kann.

Im Bereich eines vom Winkelantriebsabschnitt 204 abgewandten, freien Endes 269 der Antriebswelle 298, an dem beispielhaft eine Mehrkant-Mitnahmekontur 265 ausgebildet ist, ist ein zumindest bereichsweise hülsen- bzw. rohrförmig ausgebildetes Winkeleinstellelement 272 angeordnet, durch das die Antriebswelle 298 durchgreift. Dieses Winkeleinstellelement 272 ist bevorzugt starr, d. h. axial und radial unbeweglich mit dem Vorsatzgehäuse 210 verbunden und/oder einstückig mit diesem ausgebildet. Illustrativ hat das Winkeleinstellelement 272 an seinem dem Winkelantriebsabschnitt 204 zugewandten axialen Ende einen äußeren Ringkragen 252, der axial und radial unbeweglich zwischen zwei z. B. ringförmig ausgebildeten Vorsprüngen 257, 259 des Vorsatzgehäuses 210 angeordnet ist, z. B. durch Einpressen oder Verklemmen. An seinem anderen axialen Ende 271 ist eine stirnseitige Winkeleinstellverzahnung 274 vorgesehen.

Darüber hinaus ist der Antriebswelle 298 ein mit einem freien Ende 288 versehenes Betätigungsglied 297 zugeordnet, das die Antriebswelle 298 zumindest abschnittsweise hülsenförmig umgreift und dessen Funktionalität unten stehend bei Fig. 4 und 5 eingehend beschrieben wird. Alternativ hierzu können die Antriebswelle 298 und das Betätigungsglied 297 auch einstückig ausgebildet sein. Das Betätigungsglied 270 ist beispielhaft im Inneren des Winkeleinstellelements 272 angeordnet und bevorzugt radial von diesem beabstandet.

Gemäß einer Ausführungsform ist die Antriebswelle 298 relativ zum Betätigungsglied 297 verdrehbar. In diesem Fall kann die Antriebswelle 298 z. B. in einem in das Betätigungsglied 297 eingepressten Gleitlager, z. B. einem Sinterlager, drehbeweglich gelagert sein.

Die Vorsatzschnittstelle 202 dient zur Befestigung des Werkzeugvorsatzes 200 an einer zugeordneten Handwerkzeugmaschine, z. B. der Handwerkzeugmaschine 100 von Fig. 1, und weist illustrativ eine Winkelpositionseinstelleinheit 270 auf, der das Winkeleinstellelement 272 zugeordnet ist, sowie eine Verriegelungseinheit 260. Die Verriegelungseinheit 260 ist dazu ausgebildet, in einem Verriegelungszustand den Werkzeugvorsatz 200 zum Betrieb an der Handwerkzeugmaschine in einer vorgegebenen Winkelposition an dieser zu verriegeln und in einem Entriegelungszustand ein Abziehen des Werkzeugvorsatzes 200 von der Handwerkzeugmaschine zu ermöglichen. Die Winkelpositionseinstelleinheit 270 ist dazu ausgebildet, eine Einstellung der vorgegebenen Winkelposition des Werkzeugvorsatzes 200 zum Betrieb an der Handwerkzeugmaschine zu ermöglichen. Hierbei ist die Winkelpositionseinstelleinheit 270 gemäß einer Ausführungsform im Verriegelungszustand der Verriegelungseinheit 260 betätigbar, um eine Änderung der vorgegebenen Winkelposition zu ermöglichen, wie unten bei Fig. 5 beschrieben. Eine derartige Betätigung zur Änderung der vorgegebenen Winkelposition erfolgt bevorzugt durch eine kombinierte Längs- und Drehbewegung des Vorsatzgehäuses 210.

Gemäß einer Ausführungsform weist die Verriegelungseinheit 260 einen Verriegelungskörper 262 auf, insbesondere einen zumindest abschnittsweise rohrförmig ausgebildeten Verriegelungskörper bzw. einen mit einem rohrförmigen Aufnahmeabschnitt 261 versehenen Verriegelungskörper. In dem rohrförmigen Aufnahmeabschnitt 261 und somit in der Verriegelungseinheit 260 ist das Winkeleinstellelement 272 längs- und drehbeweglich gelagert. An einem vom Winkelantriebsabschnitt 204 abgewandten axialen Ende des Verriegelungskörpers 262 geht dieser über eine Ringschulter 281 vom rohrförmigen Aufnahmeabschnitt 261 einerseits in einen verbreiterten Bereich 283 und andererseits in ein Zentrierglied 231 über, das z. B. mindestens zwei bogenförmige, in Längsrichtung des Werkzeugvorsatzes 200, d. h. in die Richtung 299 von Fig. 1, abgeschrägte Zentrierbereiche 276, 278 aufweist. Es wird jedoch darauf hingewiesen, dass das Zentrierglied 231 lediglich beispielhaft die mindestens zwei bogenförmigen, abgeschrägten Zentrierbereiche 276, 278 aufweist und nicht zur Einschränkung der Erfindung. Das Zentrierglied 231 kann vielmehr auch einen einzelnen, nach Art eines Kegelstumpfs ausgebildeten Zentrierbereich aufweisen.

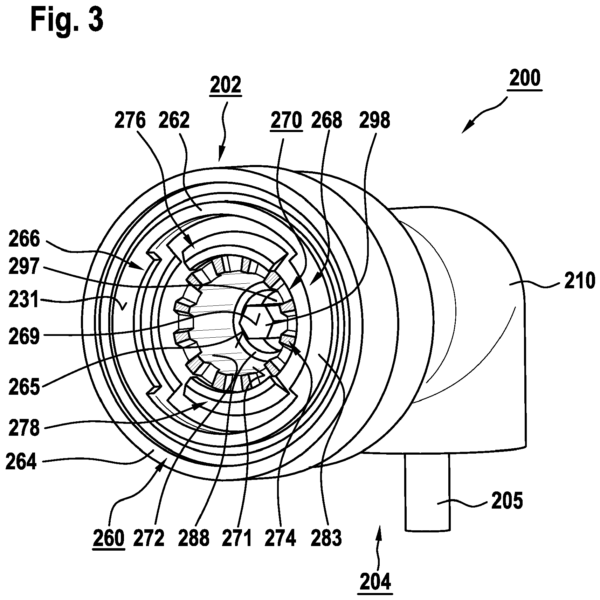

In dem verbreiterten Bereich 283 sind bevorzugt mindestens zwei Verriegelungselemente 266 (und 268 in Fig. 3) vorgesehen, die beispielhaft nach Art von Bajonetten zur Ausbildung einer Bajonett-Verbindung ausgebildet sind. Des Weiteren ist am Außenumfang dieses verbreiterten Bereichs 283 exemplarisch ein Betätigungsring 264 angeordnet, der zur Verriegelung des Verriegelungskörpers 262 an der Handwerkzeugmaschine betätigbar ist, wobei der Verriegelungskörper 262 und der Betätigungsring 264 einstückig ausgebildet sein können. Am Außenumfang des rohrförmigen Aufnahmeabschnitts 261 ist illustrativ eine Rückstellhülse 250 axial und radial beweglich gelagert. Diese stützt sich mit einem Ringkragen 214, der an einem der Ringschulter 281 des rohrförmigen Aufnahmeabschnitts 261 zugewandten axialen Ende der Rückstellhülse 250 ausgebildet ist, gegen die Ringschulter 281 ab, und greift an ihrem anderen axialen Ende in eine am Vorsatzgehäuse 210 vorgesehene Ringnut 217 ein. Alternativ hierzu kann die Rückstellhülse 250 an das Vorsatzgehäuse 210 angeformt und/oder einstückig mit diesem ausgebildet sein.

Darüber hinaus ist zwischen dem Ringkragen 214 und einem in einer äußeren Ringnut 218 des rohrförmigen Aufnahmeabschnitts 261 angeordneten Sicherungsring 219 ein Federelement 280, z. B. eine Druckfeder, vorgesehen, das die Rückstellhülse 250 mit einer vorgegebenen Federkraft in Richtung der Ringschulter 281, d. h. in die Richtung 299 von Fig. 1, vorspannt. Die Ringnut 218 ist beispielhaft im Bereich eines dem Winkelantriebsabschnitt 204 zugewandten axialen Endes 232 des rohrförmigen Aufnahmeabschnitts 261 ausgebildet.

Fig. 3 zeigt den Werkzeugvorsatz 200 von Fig. 2, bei dem die Verriegelungseinheit 260 beispielhaft das nach Art eines Bajonetts ausgebildete Verriegelungselement 266 von Fig. 2 sowie ein weiteres, nach Art eines Bajonetts ausgebildetes Verriegelungselement 268 aufweist. Darüber hinaus verdeutlicht Fig. 3 die beiden bogenförmigen, abgeschrägten Zentrierbereiche 276, 278, die Mehrkant-Mitnahmekontur 265 der Antriebswelle 298 sowie die stirnseitige Winkeleinstellverzahnung 274 des Winkeleinstellelements 272.

Fig. 4 zeigt ein beispielhaftes Werkzeugsystem 300, das illustrativ die Handwerkzeugmaschine 100 von Fig. 1 und den Winkelvorsatz 200 von Fig. 2 und 3 aufweist, zur Illustration einer beispielhaften Montage des Winkelvorsatzes 200 an der Handwerkzeugmaschine 100. Diese ist hier nur abschnittsweise anhand eines Ausschnitts des Gehäuses 110 von Fig. 1 gezeigt, an dessen Stirnseite 112 die Maschinenschnittstelle 150 von Fig. 1 angeordnet ist, und in dem die Abtriebswelle 124 in einem illustrativen Wälzlager 324 drehbeweglich gelagert ist, wobei an der Abtriebswelle 124 die Werkzeugaufnahme 140 von Fig. 1 angeordnet ist. Wie bei Fig. 1 beschrieben ist die Maschinenschnittstelle 150 hierbei gemäß einer Ausführungsform am Getriebegehäuse 119 angeordnet. Hierbei ist illustrativ das Befestigungselement 151 mit geeigneten Befestigungsgliedern, z. B. Schrauben oder Nieten, am Getriebegehäuse 119 befestigt.

Zur Montage des Winkelvorsatzes 200 an der Maschinenschnittstelle 150 der Handwerkzeugmaschine 100 wird der Winkelvorsatz 200 in die Richtung 299 von Fig. 1 an die Maschinenschnittstelle 150 von Fig. 1 herangeführt und in einer vorgegebenen Winkelposition derart daran positioniert, dass der erweiterte Bereich 283 des rohrförmigen Aufnahmeabschnitts 261 im Bereich des Befestigungselements 151 der Maschinenschnittstelle 150 angeordnet wird. Hierbei wird das Betätigungsglied 297 des Winkelvorsatzes 200 mit seinem freien Ende 288 zur Anlage gegen die Verriegelungshülse 149 der Werkzeugaufnahme 140 der Handwerkzeugmaschine 100 gebracht, sodass das freie Ende 269 der Antriebswelle 298 abschnittsweise in die leere Innenmehrkant-Aufnahme 148 der Werkzeugaufnahme 140 eingreift und an einem vollständigen Eingreifen durch beispielhaft der Werkzeugaufnahme 140 zugeordnete Verriegelungskugeln 249 gehindert wird. Diese Verriegelungskugeln 249, oder andere geeignete Verriegelungselemente, werden von der Verriegelungshülse 149 der Werkzeugaufnahme 140 auf eine z. B. dem Fachmann bekannte Art und Weise radial einwärts beaufschlagt, um somit ein ungehindertes Einschieben der Antriebswelle 268 in die Innenmehrkant-Aufnahme 148 zu verhindern, wobei die Verriegelungshülse 149 von einem Federelement 497 in die von der Handwerkzeugmaschine 100 wegweisende axiale Richtung 199 von Fig. 1 federbeaufschlagt wird.

In einem weiteren Schritt wird nun der Winkelvorsatz 200 in Richtung der Handwerkzeugmaschine 100, d. h. in die Richtung 299, auf die Maschinenschnittstelle 150 aufgeschoben, z. B. bis der erweiterte Bereich 283 des rohrförmigen Aufnahmeabschnitts 261 gegen das Befestigungselement 151 der Maschinenschnittstelle 150 anliegt, sodass durch eine Drehung des Betätigungsrings 264 der Verriegelungseinheit 260 des Werkzeugvorsatzes 200 dessen Bajonette 266, 268 in Eingriff mit den Bajonetten 152, 154 des Befestigungselements 151 gebracht und somit an diesen verriegelt werden können, sodass die Verriegelungseinheit 260 von ihrem Entriegelungszustand in den Verriegelungszustand übergeht. In diesem Verriegelungszustand wird das Vorsatzgehäuse 210 des Winkelvorsatzes 200 mit einer vorgegebenen, vom Federelement 280 der Verriegelungseinheit 260 des Werkzeugvorsatzes 200 aufgebrachten Federkraft in die Richtung 299 der Handwerkzeugmaschine 100 beaufschlagt.

Darüber hinaus wird durch das Aufschieben des Werkzeugvorsatzes 200 auf die Maschinenschnittstelle 150 die Verriegelungshülse 149 der Werkzeugaufnahme 140 von dem Betätigungsglied 297 des Winkelvorsatzes 200 gegen eine von dem Federelement 497 aufgebrachte Federkraft in die Richtung 299 verschoben, sodass das freie Ende 269 der Antriebswelle 298 in die Innenmehrkant-Aufnahme 148 eingeschoben werden kann. Hierdurch wird eine einhändige Montage des Werkzeugvorsatzes 200 an der Handwerkzeugmaschine 100 ermöglicht, wobei die Antriebswelle 298 tangential und axial spielbehaftet und bevorzugt ausschließlich zur Drehmomentübertragung in der Innenmehrkant-Aufnahme 148 des Aufnahmekörpers 147 der Werkzeugaufnahme 140 aufgenommen wird.

Des Weiteren werden die abgeschrägten Zentrierbereiche 276, 278 des rohrförmigen Aufnahmeabschnitts 261 des Werkzeugvorsatzes 200 in Anlage gegen die nach Art einer ringförmigen Kegelfläche 159 ausgebildete Zentrierhilfe 153 des Befestigungselements 151 gebracht. Somit kann eine sichere und zuverlässige axiale Zentrierung des Werkzeugvorsatzes 200 an der Werkzeugaufnahme 140 bzw. relativ zur Abtriebsspindel 124 der Handwerkzeugmaschine 100 ermöglicht werden. Darüber hinaus wird die Winkeleinstellverzahnung 274 des Winkeleinstellelements 272 des Werkzeugvorsatzes 200 in Eingriff mit den Winkeleinstellgliedern 157 des Befestigungselements 151 gebracht. Somit wird die vorgegebene Winkelposition zum Betrieb des Werkzeugvorsatzes 200 an der Handwerkzeugmaschine 100 festgelegt.

Anschließend wird der Betätigungsring 264 des Winkelvorsatzes 200 und somit der gesamte Winkelvorsatz 200 freigegeben, woraufhin das Betätigungsglied 297 aufgrund der Federkraft des Federelements 497 von der Verriegelungshülse 149 der Werkzeugaufnahme 140 in die Richtung 199 beaufschlagt wird, sodass eine axiale Verschiebung des gesamten Winkelvorsatzes 200 in die Richtung 199 erzwungen wird. Somit wird die Bajonett-Verbindung zwischen den Bajonetten 266, 268 des Werkzeugvorsatzes 200 und den Bajonetten 152, 154 des Befestigungselements 151 zusätzlich gesichert.

Fig. 5 zeigt das Werkzeugsystem 300 von Fig. 4 bei einer beispielhaften Änderungen der vorgegebenen Winkelposition des an der Handwerkzeugmaschine 100 von Fig. 1 befestigten Werkzeugvorsatzes 200 von Fig. 2 und 3. Hierzu wird das Vorsatzgehäuse 210 des Werkzeugvorsatzes 200 im Verriegelungszustand von dessen Verriegelungseinheit 260 gegen die vorgegebene Federkraft von deren Federelement 280 in eine von der Handwerkzeugmaschine 100 wegweisende Richtung, d. h. die Richtung 199 von Fig. 4, axial verschoben. Hierdurch wird auch das Winkeleinstellelement 272 axial in die Richtung 199 verschoben, sodass der Eingriff der Winkeleinstellverzahnung 274 des Winkeleinstellelements 272 in die Winkeleinstellglieder 157 des Befestigungselements 151 gelöst wird und ein Verdrehen des Vorsatzgehäuses 210 zur Änderung der Winkelposition somit möglich ist. Nach einer derartigen Änderung wird das Vorsatzgehäuse 210 wieder freigegeben und kann sich somit durch die vorgegebene Federkraft des Federelements 280 wie bei Fig. 4 beschrieben in der geänderten Winkelposition an der Maschinenschnittstelle 150 fixieren.

## Patentansprüche

1. Werkzeugvorsatz (200) mit einem Vorsatzgehäuse (210), an dem eine Befestigungsschnittstelle (202) zur Befestigung an einer Handwerkzeugmaschine (100) angeordnet ist, wobei die Befestigungsschnittstelle (202) eine Winkelpositionseinstelleinheit (270) zur Einstellung einer vorgegebenen Winkelposition des Werkzeugvorsatzes (200) an der Handwerkzeugmaschine (100) aufweist und mit einer Verriegelungseinheit (260) versehen ist, die in einem Verriegelungszustand den Werkzeugvorsatz (200) zum Betrieb an der Handwerkzeugmaschine (100) in der vorgegebenen Winkelposition verriegelt und im Entriegelungszustand ein Abziehen des Werkzeugvorsatzes (200) von der Handwerkzeugmaschine (100) ermöglicht, wobei die Winkelpositionseinstelleinheit (270) im Verriegelungszustand der Verriegelungseinheit (260) betätigbar ist, um eine Änderung der vorgegebenen Winkelposition zu ermöglichen, **dadurch gekennzeichnet, dass** die Winkelpositionseinstelleinheit (270) durch eine kombinierte Längs- und Drehbewegung des Vorsatzgehäuses (210) zur Änderung der vorgegebenen Winkelposition betätigbar ist.

2. Werkzeugvorsatz nach Anspruch 1, **dadurch gekennzeichnet, dass** die Winkelpositionseinstelleinheit (270) ein Winkeleinstellelement (272) aufweist, das starr mit dem Vorsatzgehäuse (210) verbunden ist.

3. Werkzeugvorsatz nach Anspruch 1 oder 2, **dadurch gekennzeichnet, dass** das Vorsatzgehäuse (210) und das Winkeleinstellelement (272) einstückig ausgebildet sind.

4. Werkzeugvorsatz nach Anspruch 2 oder 3, **dadurch gekennzeichnet, dass** das Winkeleinstellelement (272) zumindest abschnittsweise rohrförmig ausgebildet ist und eine stirnseitige Winkeleinstellverzahnung (274) aufweist.

5. Werkzeugvorsatz nach einem der Ansprüche 2 bis 4, **dadurch gekennzeichnet, dass** das Winkeleinstellelement (272) in der Verriegelungseinheit (260) längs- und drehbeweglich gelagert ist.

6. Werkzeugvorsatz nach einem der vorhergehenden Ansprüche, **dadurch gekennzeichnet, dass** die Verriegelungseinheit (260) einen Verriegelungskörper (262) aufweist, insbesondere einen zumindest abschnittsweise rohrförmig ausgebildeten Verriegelungskörper.

7. Werkzeugvorsatz nach Anspruch 6, **dadurch gekennzeichnet, dass** der Verriegelungskörper (262) Verriegelungselemente (266, 268) aufweist, die nach Art von Bajonetten zur Ausbildung einer Bajonett-Verbindung ausgebildet sind.

8. Werkzeugvorsatz nach Anspruch 6 oder 7, **dadurch gekennzeichnet, dass** die Verriegelungseinheit (260) einen am Verrieglungskörper (262) angeordneten Betätigungsring (264) aufweist, der zur Verriegelung des Verriegelungskörpers (262) an der Handwerkzeugmaschine (100) betätigbar ist.

9. Werkzeugvorsatz nach Anspruch 8, **dadurch gekennzeichnet, dass** der Verriegelungskörper (262) und der Betätigungsring (264) einstückig ausgebildet sind.

10. Werkzeugvorsatz nach einem der Ansprüche 6 bis 9, **dadurch gekennzeichnet, dass** am Verrieglungskörper (262) ein Federelement (280) angeordnet ist, dass dazu ausgebildet ist, das Vorsatzgehäuse (210) im Verriegelungszustand mit einer vorgegebenen Federkraft in Richtung der Handwerkzeugmaschine (100) zu beaufschlagen.

11. Werkzeugvorsatz nach Anspruch 10, **dadurch gekennzeichnet, dass** das Vorsatzgehäuse (210) im Verriegelungszustand gegen die vorgegebene Federkraft in eine von der Handwerkzeugmaschine (100) wegweisende Richtung verschiebbar ist.

12. Werkzeugvorsatz nach einem der vorhergehenden Ansprüche, **dadurch gekennzeichnet, dass** eine Antriebswelle (298) vorgesehen ist, der ein Betätigungsglied (297) zugeordnet ist, das dazu ausgebildet ist, bei einer Befestigung des Werkzeugvorsatzes (200) an der Handwerkzeugmaschine (100) eine einer Werkzeugaufnahme (140) der Handwerkzeugmaschine (100) zugeordnete Verriegelungshülse (149) gegen eine von einem zugeordneten Federelement (497) aufgebrachte Federkraft in Richtung (299) der Handwerkzeugmaschine (100) zu verschieben.

13. Werkzeugsystem (300) mit einer Handwerkzeugmaschine (100) und einem Werkzeugvorsatz (200) nach einem der Ansprüche 1 bis 12.

## Claims

1. Tool attachment (200) having an attachment housing (210) at which a fastening interface (202) for fastening to a portable power tool (100) is arranged, wherein the fastening interface (202) has an angular-position setting unit (270) for setting a predetermined angular position of the tool attachment (200) on the portable power tool (100) and is provided with a locking unit (260) that locks the tool attachment (200) for operation to the portable power tool (100) in the predetermined angular position in a locked state and allows the tool attachment (200) to be taken off the portable power tool (100) in the unlocked state, wherein the angular-position setting unit (270) is actuable in the locked state of the locking unit (260) in order to allow the predetermined angular position to be changed, **characterized in that** the angular-position setting unit (270) is actuable by a combined longitudinal and rotary movement of the attachment housing (210) in order to change the predetermined angular position.

2. Tool attachment according to Claim 1, **characterized in that** the angular-position setting unit (270) has an angle setting element (272) that is rigidly connected to the attachment housing (210).

3. Tool attachment according to Claim 1 or 2, **characterized in that** the attachment housing (210) and the angle setting element (272) are formed in one piece.

4. Tool attachment according to Claim 2 or 3, **characterized in that** the angle setting element (272) is formed at least partially in a tubular manner and has an end-side angle setting toothing (274) .

5. Tool attachment according to one of Claims 2 to 4, **characterized in that** the angle setting element (272) is mounted in a longitudinally movable and rotatable manner in the locking unit (260).

6. Tool attachment according to one of the preceding claims, **characterized in that** the locking unit (260) has a locking body (262), in particular a locking body formed at least partially in a tubular manner.

7. Tool attachment according to Claim 6, **characterized in that** the locking body (262) has locking elements (266, 268) that are formed in the manner of bayonets in order to form a bayonet connection.

8. Tool attachment according to Claim 6 or 7, **characterized in that** the locking unit (260) has an actuating ring (264) arranged on the locking body (262), said actuating ring (264) being actuable in order to lock the locking body (262) to the portable power tool (100).

9. Tool attachment according to Claim 8, **characterized in that** the locking body (262) and the actuating ring (264) are formed in one piece.

10. Tool attachment according to one of Claims 6 to 9, **characterized in that** a spring element (280) is arranged on the locking body (262), said spring element (280) being configured to apply a predetermined spring force in the direction of the portable power tool (100) to the attachment housing (210) in the locked state.

11. Tool attachment according to Claim 10, **characterized in that** the attachment housing (210) is displaceable counter to the predetermined spring force in a direction away from the portable power tool (100) in the locked state.

12. Tool attachment according to one of the preceding claims, **characterized in that** a drive shaft (298) is provided, to which an actuating member (297) is assigned, said actuating member (297) being configured, when the tool attachment (200) is being fastened to the portable power tool (100), to displace a locking sleeve (149) assigned to a tool receptacle (140) of the portable power tool (100) counter to a spring force, applied by an associated spring element (497), in the direction (299) of the portable power tool (100).

13. Tool system (300) having a portable power tool (100) and a tool attachment (200) according to one of Claims 1 to 12.

## Revendications

1. Adaptateur d'outil (200) comprenant un boîtier d'adaptateur (210) sur lequel est disposée une interface de fixation (202) pour la fixation à une machine-outil à main (100), l'interface de fixation (202) présentant une unité d'ajustement de position angulaire (270) pour l'ajustement d'une position angulaire prédéfinie de l'adaptateur d'outil (200) à la machine-outil à main (100) et étant pourvue d'une unité de verrouillage (260) qui, dans un état de verrouillage, verrouille l'adaptateur d'outil (200) dans la position angulaire prédéfinie en vue du fonctionnement sur la machine-outil à main (100), et dans l'état déverrouillé, permet de retirer l'adaptateur d'outil (200) de la machine-outil à main (100), l'unité d'ajustement de position angulaire (270), dans l'état de verrouillage de l'unité de verrouillage (260) pouvant être actionnée pour permettre une variation de la position angulaire prédéfinie, **caractérisé en ce que** l'unité d'ajustement de position angulaire (270) peut être actionnée par un mouvement combiné longitudinal et de rotation du boîtier d'adaptateur (210) pour faire varier la position angulaire prédéfinie.

2. Adaptateur d'outil selon la revendication 1, **caractérisé en ce que** l'unité d'ajustement de position angulaire (270) présente un élément d'ajustement d'angle (272) qui est connecté rigidement au boîtier d'adaptateur (210).

3. Adaptateur d'outil selon la revendication 1 ou 2, **caractérisé en ce que** le boîtier d'adaptateur (210) et l'élément d'ajustement d'angle (272) sont réalisés d'une seule pièce.

4. Adaptateur d'outil selon la revendication 2 ou 3, **caractérisé en ce que** l'élément d'ajustement d'angle (272) est réalisé sous forme au moins en partie tubulaire et présente une denture d'ajustement d'angle (274) du côté frontal.

5. Adaptateur d'outil selon l'une quelconque des revendications 2 à 4, **caractérisé en ce que** l'élément d'ajustement d'angle (272) est supporté de manière déplaçable en longueur et en rotation dans l'unité de verrouillage (260).

6. Adaptateur d'outil selon l'une quelconque des revendications précédentes, **caractérisé en ce que** l'unité de verrouillage (260) présente un corps de verrouillage (262), en particulier un corps de verrouillage réalisé sous forme au moins en partie tubulaire.

7. Adaptateur d'outil selon la revendication 6, **caractérisé en ce que** le corps de verrouillage (262) présente des éléments de verrouillage (266, 268) qui sont réalisés à la manière de baïonnettes pour réaliser une connexion à baïonnette.

8. Adaptateur d'outil selon la revendication 6 ou 7, **caractérisé en ce que** l'unité de verrouillage (260) présente une bague d'actionnement (264) disposée au niveau du corps de verrouillage (262), qui peut être actionnée pour verrouiller le corps de verrouillage (262) sur la machine-outil à main (100) .

9. Adaptateur d'outil selon la revendication 8, **caractérisé en ce que** le corps de verrouillage (262) et la bague d'actionnement (264) sont réalisés d'une seule pièce.

10. Adaptateur d'outil selon l'une quelconque des revendications 6 à 9, **caractérisé en ce qu'**un élément de ressort (280) est disposé sur le corps de verrouillage (262), lequel est réalisé de manière à solliciter le boîtier d'adaptateur (210) dans l'état de verrouillage avec une force de ressort prédéfinie dans la direction de la machine-outil à main (100).

11. Adaptateur d'outil selon la revendication 10, **caractérisé en ce que** le boîtier d'adaptateur (210) peut être déplacé dans l'état de verrouillage à l'encontre de la force de ressort prédéfinie dans une direction à l'écart de la machine-outil à main (100).

12. Adaptateur d'outil selon l'une quelconque des revendications précédentes, **caractérisé en ce qu'**un arbre d'entraînement (298) est prévu, auquel est associé un organe d'actionnement (297) qui est réalisé, dans le cas d'une fixation de l'adaptateur d'outil (200) à la machine-outil à main (100), de manière à déplacer, dans la direction (299) de la machine-outil à main (100), une douille de verrouillage (149) associée à un logement d'outil (140) de la machine-outil à main (100) à l'encontre d'une force de ressort appliquée par un élément de ressort (497) associé.

13. Système d'outil (300) comprenant une machine-outil à main (100) et un adaptateur d'outil (200) selon l'une quelconque des revendications 1 à 12.
